(19) Europäisches Patentamt

European Patent Office

Office européen des brevets

(11) **EP 1 420 555 B1**

(12) **FASCICULE DE BREVET EUROPEEN**

(45) Date de publication et mention
de la délivrance du brevet:
**21.12.2005   Bulletin 2005/51**

(51) Int Cl.⁷: **H04L 25/02**, H04B 7/08

(21) Numéro de dépôt: **03079194.1**

(22) Date de dépôt: **02.10.2001**

(54) **Procédé et système pour l'estimation d'un canal de transmission au moyen des séquences complémentaires**

Verfahren und System zur Kanalschätzung von Übertragungskanälen mittels komplementärer Sequenzen

Method and system for channel estimation of transmission channels by means of complementary sequences

(84) Etats contractants désignés:
**AT BE CH CY DE DK ES FI FR GB GR IE IT LI LU MC NL PT SE TR**

(30) Priorité: **02.10.2000  FR 0012761**

(43) Date de publication de la demande:
**19.05.2004   Bulletin 2004/21**

(62) Numéro(s) de document de la (des) demande(s)
initiale(s) en application de l'article 76 CBE:
**01402542.3 / 1 193 930**

(73) Titulaire: **Mitsubishi Electric Information Technology Centre Europe B.V.**
**1119 NS Schiphol Rijk (NL)**

(72) Inventeurs:
• **Jechoux, Bruno**
**35708 Rennes Cedex 7 (FR)**
• **Rudolf, Marian**
**35708 Rennes Cedex 7 (FR)**

(74) Mandataire: **Maillet, Alain**
**Cabinet le Guen & Maillet,**
**5, Place Newquay,**
**B.P. 70250**
**35802 Dinard Cedex (FR)**

(56) Documents cités:
• SPASOJEVIC P ET AL: "ISI channel estimation using complementary sequences" 2000 IEEE INTERNATIONAL SYMPOSIUM ON INFORMATION THEORY (CAT. NO.00CH37060), 2000 IEEE INTERNATIONAL SYMPOSIUM ON INFORMATION THEORY, SORRENTO, ITALY, 25-30 JUNE 2000, page 55 XP002169520 2000, Piscataway, NJ, USA, IEEE, USA ISBN: 0-7803-5857-0
• TELLAMBURA C ET AL: "CHANNEL ESTIMATION USING APERIODIC BINARY SEQUENCES" IEEE COMMUNICATIONS LETTERS,IEEE SERVICE CENTER, PISCATAWAY,US,US, vol. 2, no. 5, 1 mai 1998 (1998-05-01), pages 140-142, XP000766142 ISSN: 1089-7798
• GOLAY M J E: "COMPLEMENTARY SERIES" IRE TRANSACTIONS ON INFORMATION THEORY, IEEE INC. NEW YORK, US, vol. 7, 1 avril 1961 (1961-04-01), pages 82-87, XP000608597

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne une séquence d'estimation de canal destinée à être émise par un émetteur à destination d'un récepteur via un canal. Une telle séquence est par exemple utilisée dans un procédé d'estimation d'un canal de transmission objet également de la présente invention. Ce procédé d'estimation de canal a pour résultat une estimation optimale des retards, des phases et des atténuations des différents trajets dans le cas d'un canal à un seul trajet ou à trajets multiples. Comme on le comprendra par la suite, cette estimation optimale est obtenue dans un fenêtre temporelle de durée qui est déterminée et qui peut donc être choisie lors de la construction de la séquence d'estimation de canal.

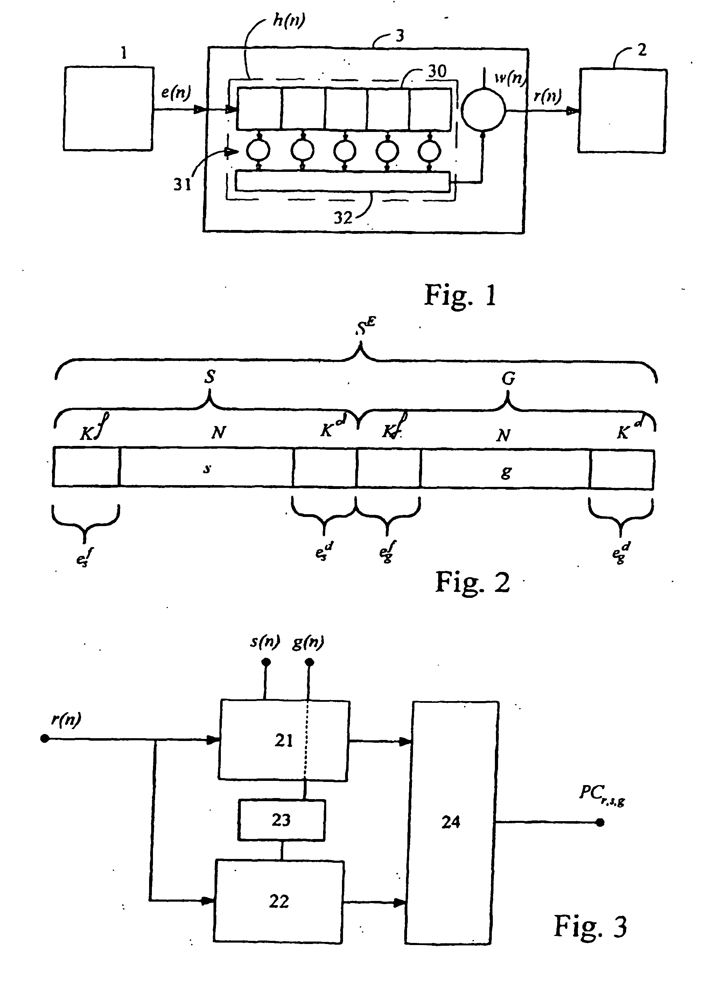

Dans un système de télécommunication, les informations circulent entre des émetteurs et des récepteurs par l'intermédiaire de canaux. La Fig. 1 illustre un modèle discret dans le temps de la chaîne de transmission entre un émetteur 1 et un récepteur 2 par l'intermédiaire d'un canal de transmission 3. D'une manière générale, les canaux de transmissions peuvent correspondre à différents supports physiques, radioélectriques, filaires, optiques, etc., et à différents environnements, communications fixes ou mobiles, satellites, câbles sous-marins, etc.

Du fait des réflexions multiples dont peuvent être l'objet les ondes émises par l'émetteur 1, le canal 3 est un canal dit multi-trajet du fait qu'entre l'émetteur 1 et le récepteur 2 se trouvent généralement des obstacles qui conduisent à des réflexions des ondes se propageant alors selon plusieurs trajets. Un canal multi-trajet est généralement modélisé comme l'indique la Fig. 1, c'est-à-dire constitué d'un registre à décalage 30 comportant $L$ cases en série (ici $L = 5$) référencées par un indice $k$ pouvant prendre les valeurs comprises entre 1 et $L$ et dont les contenus glissent vers la droite sur la Fig. 1 à chaque arrivée d'un symbole sur son entrée. La sortie de chaque case d'indice $k$ est soumis à un filtre 31 qui est représentatif de la perturbation subie et qui agit sur l'amplitude avec une atténuation $a_k$, apporte un déphasage $a_k$ et un retard $r_k$. La sortie de chaque filtre 31 est alors sommée dans un sommateur 32. La réponse impulsionnelle globale ainsi obtenue est notée $h(n)$. Cette réponse impulsionnelle du canal $h(n)$ peut s'écrire sous la forme :

$$h(n) = \sum_{k=1}^{L} a_k \delta(n - r_k) e^{ja_k}$$

où $\delta(n)$ représentant l'impulsion de Dirac, $\delta(n-r_k)$ dénote une fonction retard de la valeur $r_k$.

La sortie du sommateur 32 est fournie à l'entrée d'un additionneur 33 pour l'addition d'un signal aléatoire, modélisé par un bruit blanc gaussien $w(n)$, qui correspond au bruit thermique présent dans le système de télécommunications.

On comprendra que si l'émetteur 1 émet le signal $e(n)$, le signal reçu $r(n)$ par le récepteur 2 peut s'écrire sous la forme :

$$r(n) = e(n) * h(n) + w(n)$$

$$= e(n) * \sum_{k=1}^{L} a_k \delta(n - r_k) e^{ja_k} + w(n)$$

$$= \sum_{k=1}^{L} a_k e(n - r_k) e^{ja_k} + w(n)$$

L'opérateur * désigne le produit de convolution, défini de manière générale par la relation suivante :

$$c(n) = a(n) * b(n) = \sum_{m=-\infty}^{+\infty} a(m) \cdot b(n - m)$$

Afin de contrecarrer la distorsion induite du signal émis $e(n)$ par l'émetteur 1, il est nécessaire de déterminer ou d'estimer à chaque instant les caractéristiques du canal 3, c'est-à-dire estimer l'ensemble des coefficients $a_k$, $r_k$ et $a_k$ du modèle du canal 3 représenté à la Fig. 1. Il est nécessaire de répéter cette opération d'estimation à une fréquence plus ou moins grande selon la rapidité avec laquelle les caractéristiques du canal évoluent.

EP 1 420 555 B1

Une méthode répandue d'estimation du canal consiste à faire émettre, par l'émetteur 1, des signaux pilotes $e(n)$ prédéterminés et connus du récepteur 2 et à comparer les signaux reçus $r(n)$ dans le récepteur 2, par exemple au moyen d'une corrélation apériodique, avec ceux qui y sont attendus pour en déduire les caractéristiques du canal 3 entre l'émetteur 1 et le récepteur 2.

On rappelle que la corrélation apériodique de deux signaux de longueur N a une longueur totale 2N-1 et s'exprime, à partir du produit de convolution, par la relation suivante :

$$\varphi_{a,b}(n) = a^{\bullet}(-n) * b(n) = \sum_{m=-(N-1)}^{N-1} a(m) \cdot b(m+n)$$

pour deux signaux $a(n)$ et $b(n)$ de longueur finie N, où le signe en exposant * dénote l'opération conjuguée complexe.

Le résultat de l'opération de corrélation apériodique constitue l'estimé de la réponse impulsionnelle du canal.

La corrélation apériodique du signal $r(n)$ reçu par le récepteur 2 avec le signal $e(n)$ émis par l'émetteur 1 et connu par le récepteur 2 peut s'écrire donc de la manière suivante :

$$\varphi_{e,r}(n) = r(n) * e^*(-n)$$

$$= [e(n) * h(n) + w(n)]^* e^*(-n)$$

$$= \varphi_{e,e*h}(n) + \varphi_{e,w}(n)$$

$$= \varphi_{e,e}(n) * h(n) + \varphi_{e,w}(n)$$

Dans la pratique, on va choisir la séquence $e(n)$ émise par l'émetteur 1 de manière que l'auto-corrélation $\varphi_{e,e}(n)$ tende vers $k \cdot \delta(n)$, $k$ étant un nombre réel, et que $\varphi_{e,w}(n)/\varphi_{e,e}(n)$ tende vers 0. En effet, la corrélation apériodique peut alors s'écrire :

$$\varphi_{e,r}(n) = k. \, \delta(n) * h(n) + \varphi_{e,w}(n)$$

$$= k \cdot h(n) + \varphi_{e,w}(n)$$

Du fait que $\varphi_{e,w}(n)$ est négligeable devant $\varphi_{e,e}(n)$, on peut donc écrire :

$$\varphi_{e,r}(n) \approx k \cdot h(n)$$

On constate alors que, compte tenu des hypothèses ci-dessus, le résultat de la corrélation apériodique du signal $r(n)$ reçu par le récepteur 2 avec le signal $e(n)$ émis par l'émetteur 1 et connu par le récepteur 2 constitue l'estimé de la réponse impulsionnelle du canal 3.

On a pu montrer qu'il n'existe pas de séquence unique $e(n)$ pour laquelle la fonction d'auto-corrélation apériodique $\varphi_{e,e}(n) = k.\delta(n)$.

Le but de la présente invention est de proposer un procédé d'estimation d'un canal de transmission ou de télécommunication donnant un résultat très faiblement bruité. En particulier, un but de la présente invention est de proposer un procédé d'estimation dans lequel on obtient un pic de corrélation isolé et prononcé.

Plus précisément, l'invention est définie par une séquence d'estimation de canal destinée à être émise par un émetteur à destination d'un récepteur via un canal, ladite séquence d'estimation de canal étant constituée de deux séquences concaténées comprenant respectivement une première séquence de Golay et une seconde séquence de Golay qui est complémentaire de la première séquence de Golay. De telles séquences complémentaires sont par exemple décrites dans le document SPASOJEVIC P et AL, intitulé "ISI channele estimation using complementary sequences" et publié le 25-30 juin 2000.

Selon la présente invention, ladite première séquence comprend de plus au moins une des extensions qui

3

sont respectivement une réplique de la partie de début et une réplique de la partie de fin de ladite première séquence de Golay et qui sont respectivement concaténées à la fin et au début de ladite première séquence de Golay et ladite seconde séquence comprend de plus au moins une des extensions qui sont respectivement une réplique de la partie de début et une réplique de la partie de fin de ladite seconde séquence de Golay et qui sont respectivement concaténées à la fin et au début de ladite seconde séquence de Golay.

Avantageusement, les longueurs desdites extensions sont telles que leur somme est supérieure à la longueur du canal.

Les longueurs desdites extensions seront par exemple égales à une valeur prédéterminée.

L'invention est également définie par un procédé d'estimation des caractéristiques d'un canal de transmission entre un émetteur et un récepteur, ledit procédé consistant, côté émetteur, à transmettre audit récepteur une séquence d'estimation de canal telle que décrite ci-dessus et, côté récepteur, à corréler ledit signal reçu avec la première et la seconde desdites séquences complémentaires.

Avantageusement, le signal reçu est corrélé, d'une part, avec la première desdites séquences complémentaires et, d'autre part, avec la seconde desdites séquences complémentaires retardée par rapport à la première. Les résultats des deux corrélations sont ensuite additionnés pour fournir un signal de corrélation. Le retard de ladite seconde séquence est choisi égal à la longueur de la première séquence additionnée, d'une part, de l'extension droite de la première séquence et, d'autre part, de l'extension gauche de la seconde séquence.

Les caractéristiques dudit canal sont alors déduites du résultat du signal de corrélation dans une fenêtre temporelle [$-K^f$, $K^d$], où $K^f$ et $K^d$ sont les longueurs respectives desdites extensions.

Typiquement, les caractéristiques dudit canal sont déduites des caractéristiques d'un pic de corrélation au sein de ladite fenêtre temporelle, en particulier de sa position à l'intérieur de cette dernière.

La présente invention concerne également un procédé d'estimation des caractéristiques d'un canal de transmission entre un émetteur et un récepteur utilisant une séquence d'estimation de canal telle qu'il vient d'être décrit.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

La Fig. 1 est une vue schématique d'un système de transmission,
La Fig. 2 est un schéma d'une séquence d'estimation de canal selon la présente invention, émise par un émetteur d'un système de transmission, et
La Fig. 3 est un schéma synoptique d'un dispositif de corrélation selon la présente invention.

Selon l'invention, la séquence d'estimation de canal $S^E$ est constitué de deux séquences $S$ et $G$ concaténées (la seconde séquence $G$ est décalée dans le temps de la longueur de la première séquence $S$), respectivement formées à partir de deux séquences complémentaires $s$ et $g$. On appelle ici séquences complémentaires des séquences ayant pour propriété remarquable que la somme de leurs auto-corrélations apériodiques est une fonction de Dirac parfaite.

Autrement dit, si on appelle $s(n)$ et $g(n)$ avec $n = 0,1,...,N-1$ deux séquences complémentaires, on peut donc, par définition, écrire :

$$\varphi_{s,s}(n) + \varphi_{g,g}(n) = k \cdot \delta(n) \qquad (1)$$

Plusieurs procédés sont connus dans la littérature pour construire de telles séquences complémentaires : séquences complémentaires de Golay, séquences complémentaires polyphases, séquences de Welti, etc.

Par exemple, lesdites deux séquences $s$ et $g$ seront des séquences complémentaires de Golay, ou des séquences complémentaires polyphases, ou des séquences de Welti, etc.

Chaque séquence complémentaire $s$ et $g$ a un longueur de $N$. Elles peuvent donc s'écrire :

$$s = \{s_1\ s_2\ s_3\ ...\ s_N\}$$

et

$$g = \{g_1\ g_2\ g_3\ ...\ g_N\}$$

Selon la présente invention, afin d'obtenir les séquences $S$ et $G$, les séquences $s$ et $g$ sont étendues par des extensions constituant des répliques de leur partie de début et/ou de leur partie de fin respectivement concaténées en fin et/ou en début de séquence. On parle alors d'extensions périodiques.

Dans le mode de réalisation représenté à la Fig .2, les séquences *s* et *g* sont étendues périodiquement à droite et à gauche respectivement par des extensions $e^f$, $e^d$ et $e^f$, $e^d$. Les extensions $e^f$ et $e^f$ sont des répliques des parties respectives de fin des séquences *s* et *g*. Quant aux extensions $e^d$ et $e^d$, elles sont des répliques des parties respectives de début des mêmes séquences *s* et *g*.

Les longueurs respectives des extensions sont notées $K^f$ et $K^d$. Selon le mode de réalisation représenté à la Fig. 2, les longueurs $K^f$ et $K^d$ sont égales à une même valeur *K*.

Ainsi, dans le mode de réalisation particulier de la Fig. 2, les extensions peuvent s'écrire de la manière suivante :

$$e_s^f = \{s_{N-K+1}, s_{N-K+2}, ..., s_N\}$$

$$e_s^d = \{s_1, s_2...., s_K\}$$

$$e_g^d = \{g_1, g_2, ... g_k\}$$

$$e_g^f = \{g_{N-K+1}, g_{N-K+2}, ..., g_N\}$$

On notera que, dans des modes de réalisation spécifiques, soit la longueur $K^f$, soit la longueur $K^d$, pourrait être nulle.

A la Fig. 3, le signal reçu r(n) par le récepteur 2 est appliqué, d'une part, à un premier corrélateur 21 et, d'autre part, à un second corrélateur 22. Le premier corrélateur 21 établit la corrélation du signal *r(n)* avec la séquence *s(n)* qui a servi à l'élaboration de la séquence d'estimation de canal $S^E$ tandis que le second corrélateur 22 établit la corrélation du même signal *r(n)* avec l'autre séquence *g(n)* ayant également servi à l'élaboration de la séquence d'estimation de canal $S^E$ préalablement retardée, dans un retardateur 23, de la somme de la longueur *N* de la première séquence *s(n)* additionnée aux longueurs $K^d$ et $K^f$ de l'extension gauche $e_s^d$ de la première séquence *s(n)* et de l'extension droite $e_g^f$ de la seconde séquence *g(n)*. Ainsi, le premier corrélateur 21 réalise la fonction de corrélation $\varphi(r(n), s(n))$ tandis que le second corrélateur 22 réalise la fonction $\varphi(r(n), g(n - N - K^d - K^f))$.

Les sorties respectives des premier et second corrélateurs 21 et 22 sont reliées aux entrées respectives d'un sommateur 24 qui délivre alors le signal de corrélation $PC_{r,s,g}$ suivant :

$$PC_{r,s,g} = \varphi\big(r(n), s(n)\big) + \varphi\big(r(n), g(n - N - K^d - K^f)\big)$$

On peut montrer qu'en théorie, ce signal de corrélation, dans la fenêtre $[-K^f, K^d]$, est, à une constante près, une impulsion de Dirac.

En effet, dans le cas où $K^f = K^d = K,$ ce signal de corrélation peut s'écrire :

$$PC_{e,s,g}(n) = \varphi(e(n), s(n)) + \varphi(e(n), g(n - N - 2K))$$
$$= \varphi(S(n), s(n)) + \varphi(S(n), g(n - N - 2K)) + \varphi(G(n - N - 2K), s(n)) +$$
$$\varphi(G(n - N - 2K), g(n - N - 2K))$$

Or chacun des termes du second membre de l'égalité est de longueur 2(N+K)-1, ce qui signifie que les termes d'inter-corrélation $\varphi(S(n), g(n - N - 2K))$ et $\varphi(G(n - N - 2K), s(n))$ *sont* nuls pour $n \in [-K, K]$ quand K<N. Par conséquent, dans l'intervalle $[-K, K]$ avec K<N, le signal de corrélation se réduit à :

$$PC_{e,s,g}(n) = \varphi(S(n), s(n)) + \varphi(G(n - N - 2K), g(n - N - 2K))$$
$$= \varphi(S(n), s(n)) + \varphi(G(n), g(n))$$
$$= \varphi_{s,s}(n) + \varphi_{g,g}(n)$$
$$= k\delta(n)$$

Par ailleurs, de manière générale, la longueur du signal de corrélation $PC_{r,s,g}$ est égale à $2N+K^f+K^d$-1.

En pratique, il est possible de déterminer, à partir de la position du pic du signal de corrélation $PC_{r,s,g}$ dans une fenêtre d'analyse $[-K^f, K^d]$ incluse dans le signal de corrélation, la position temporelle du signal reçu $r(n)$ par le récepteur 2. En d'autres termes, il est possible de déterminer le retard $r_k$ engendré par le canal 3. Les caractéristiques du pic dans la fenêtre d'analyse permettent également de déterminer les autres caractéristiques du canal 3, à savoir l'atténuation $a_k$ et le déphasage $a_k$ engendrés par le canal 3.

Si la largeur $(K^f + K^d)$ de la fenêtre d'analyse $[-K^f, K^d]$ est supérieure ou égale à la longueur $L$ du canal 3, il est possible de déterminer de manière parfaite la position temporelle de tous les signaux reçus $r(n)$ de tous les trajets.

En dehors de cette fenêtre d'analyse $[-K^f, K^d]$, il est encore possible de déterminer les positions des signaux reçus mais de manière imparfaite. Une telle analyse en dehors de la fenêtre $[-K^f, K^d]$ peut être menée lorsque la largeur $(K^f + K^d)$ de la fenêtre $[-K^f, K^d]$ est inférieure à la longueur $L$.

## Revendications

1. Signal d'estimation du canal émis par un émetteur (1) à un récepteur (2) via un canal (3) d'un système de télécommunication, ledit signal étant constitué de deux séquences concaténées (S, G) comprenant respectivement une première séquence (s) de Golay et une seconde séquence (g) de Golay qui est complémentaire de la première séquence (s) de Golay, **caractérisé en ce que**

   ladite première séquence (S) comprend de plus au moins une des extensions es$^d$, es$^f$ qui sont respectivement une réplique de la partie de début et une réplique de la partie de fin de ladite première séquence (s) de Golay et qui sont respectivement concaténées à la fin et au début de ladite première séquence (s) de Golay, et **en ce que**
   ladite seconde séquence (G) comprend de plus au moins une des extensions eg$^d$, eg$^f$ qui sont respectivement une réplique de la partie de début et une réplique de la partie de fin de ladite seconde séquence (g) de Golay et qui sont respectivement concaténées à la fin et au début de ladite seconde séquence (g) de Golay.

2. Signal d'estimation de canal selon la revendication 1, **caractérisé en ce que** la somme des longueurs ($K^f$, $K^d$) desdites extensions est supérieure à la longueur de canal dudit canal (3)

3. Signal d'estimation de canal selon la revendication 1, **caractérisé en ce que** les longueurs ($K^f$, $K^d$) desdites extensions sont les mêmes.

4. Procédé d'estimation des caractéristiques d'un canal de transmission (3) dans un système de télécommunication, ledit procédé comprenant une étape de transmission d'un signal d'estimation de canal d'un émetteur (1) à récepteur (2) sur ledit canal de transmission (3), ledit signal d'estimation étant constitué de deux séquences concaténées (S, G) comprenant respectivement une première séquence (s) de Golay et une seconde séquence (g) de Golay qui est complémentaire de la première séquence (s) de Golay, **caractérisé en ce que**

   ladite première séquence (S) comprend de plus au moins une des extensions es$^d$, es$^f$ qui sont respectivement une réplique de la partie de début et une réplique de la partie de fin de ladite première séquence (s) de Golay et qui sont respectivement concaténées à la fin et au début de ladite première séquence (s) de Golay, et **en ce que**
   ladite seconde séquence (G) comprend de plus au moins une des extension eg$^d$, eg$^f$ qui sont respectivement une réplique de la partie de début et une réplique de la partie de fin de ladite seconde séquence (g) de Golay et qui sont respectivement concaténées à la fin et au début de ladite seconde séquence (g) de Golay.

5. Procédé d'estimation des caractéristiques d'un canal de transmission (3) d'un système de télécommunication selon la revendication 4 comprenant en outre l'étape de réception d'un signal d'estimation de canal et de corrélation dudit signal d'estimation de canal reçu avec les séquences qui inclut respectivement une partie des deux séquences (S et G).

6. Procédé d'estimation des caractéristiques d'un canal de transmission (3) dans un système de télécommunication selon la revendication 5, **caractérisé en ce que** les caractéristiques du canal (3) sont dérivées du résultat de la corrélation dans une fenêtre temporelle [-$K^f$, $K^d$], où $K^f$ et $K^d$ sont les longueurs desdites extensions.

7. Procédé d'estimation des caractéristiques d'un canal de transmission (3) dans un système de télécommunication selon la revendication 5, **caractérisé en ce que** le résultat de la corrélation inclut un emplacement temporel d'un pic de corrélation à l'intérieur de ladite fenêtre temporelle.

8. Procédé d'estimation des caractéristiques d'un canal de transmission (3) dans un système de télécommunication selon la revendication 5 comprenant en outre l'étape de retard de la séquence incluant une partie de la séquence (G) par rapport à la séquence incluant une partie de la séquence (S) préalablement à l'étape de corrélation et l'addition des deux résultats de corrélation obtenus dans ladite étape de corrélation,

dans lequel le délai de la séquence inclut une partie de la séquence (G) égale à la longueur totale de la séquence (s), l'extension droite ($es^d$) de la séquence (s) et l'extension gauche ($eg^f$) de la séquence (g).

9. Système de télécommunication comprenant un émetteur (1) et un récepteur (2) dans lequel l'émetteur (1) est destiné à transmettre un signal d'estimation de canal au récepteur (2), ledit signal d'estimation étant constitué de deux séquences concaténées (S, G) comprenant respectivement une première séquence (s) de Golay et une seconde séquence (g) de Golay qui est complémentaire de la première séquence (s) de Golay, **caractérisé en ce que**

ladite première séquence (S) comprend de plus au moins une des extensions $es^d$, $es^f$ qui sont respectivement une réplique de la partie de début et une réplique de la partie de fin de ladite première séquence (s) de Golay et qui sont respectivement concaténées à la fin et au début de ladite première séquence (s) de Golay, et **en ce que**
ladite seconde séquence (G) comprend de plus au moins une des extensions $eg^d$, $eg^f$ qui sont respectivement une réplique de la partie de début et une réplique de la partie de fin de ladite seconde séquence (g) de Golay et qui sont respectivement concaténées à la fin et au début de ladite seconde séquence (g) de Golay.

10. Emetteur d'un système de télécommunication destiné à transmettre un signal d'estimation constitué de deux séquences concaténées (S, G) comprenant respectivement une première séquence (s) de Golay et une seconde séquence (g) de Golay qui est complémentaire de la première séquence (s) de Golay, **caractérisé en ce que**

ladite première séquence (S) comprend de plus au moins une des extensions $es^d$, $es^f$ qui sont respectivement une réplique de la partie de début et une réplique de la partie de fin de ladite première séquence (s) de Golay et qui sont respectivement concaténées à la fin et au début de ladite première séquence (s) de Golay, et **en ce que**
ladite seconde séquence (G) comprend de plus au moins une des extension $eg^d$, $eg^f$ qui sont respectivement une réplique de la partie de début et une réplique de la partie de fin de ladite seconde séquence (g) de Golay et qui sont respectivement concaténées à la fin et au début de ladite seconde séquence (g) de Golay.

**Patentansprüche**

1. Signal zur Kanalschätzung, das von einem Sender (1) über einen Kanal (3) eines Telekommunikationssystems zu einem Empfänger (2) gesendet wird, wobei das Signal aus zwei verketteten Sequenzen (S, G) besteht, die jeweils eine erste Golay-Sequenz (s) und eine zweite Golay-Sequenz (g), die zu der ersten Golay-Sequenz (s) komplementär ist, umfassen, **dadurch gekennzeichnet, dass**

die erste Sequenz (S) ferner mindestens eine der Erweiterungen $es^d$, $es^f$ umfasst, die jeweils eine Replik des Anfangsteils und eine Replik des Endteils der ersten Golay-Sequenz (s) sind und die jeweils mit dem Ende und dem Anfang der ersten Golay-Sequenz (s) verkettet sind, und dass
die zweite Sequenz (G) ferner mindestens eine der Erweiterungen $eg^d$, $eg^f$ umfasst, die jeweils eine Replik des Anfangsteils und eine Replik des Endteils der zweiten Golay-Sequenz (g) sind und die jeweils mit dem Ende und mit dem Anfang der zweiten Golay-Sequenz (g) verkettet sind.

2. Signal zur Kanalschätzung nach Anspruch 1, **dadurch gekennzeichnet, dass** die Summe der Längen ($K^f$, $K^d$) der Erweiterungen größer als die Kanallänge des Kanals (3) ist.

3. Signal zur Kanalschätzung des Kanals nach Anspruch 1, **dadurch gekennzeichnet, dass** die Längen ($K^f$, $K^d$) der Erweiterungen gleich sind.

4. Verfahren zur Schätzung der Eigenschaften eines Übertragungskanals (3) in einem Telekommunikationssystem, wobei das Verfahren einen Schritt zum Übertragen eines Signals zur Kanalschätzung von einem Sender (1) zu einem Empfänger (2) auf dem Übertragungskanal (3) umfasst, wobei das Schätzsignal aus zwei verketteten Sequenzen (S, G) besteht, die jeweils eine erste Golay-Sequenz (s) und eine zweite Golay-Sequenz (g), die zu der ersten Golay-Sequenz (s) komplementär ist, umfassen, **dadurch gekennzeichnet, dass**

die erste Sequenz (S) ferner mindestens eine der Erweiterungen $es^d$, $es^f$ umfasst, die jeweils eine Replik des Anfangsteils und eine Replik des Endteils der ersten Golay-Sequenz (s) sind und die jeweils mit dem Ende und dem Anfang der ersten Golay-Sequenz (s) verkettet sind, und dass
die zweite Sequenz (G) ferner mindestens eine der Erweiterungen $eg^d$, $eg^f$ umfasst, die jeweils eine Replik des Anfangsteils und eine Replik des Endteils der zweiten Golay-Sequenz (g) sind und die jeweils mit dem Ende und dem Anfang der zweiten Golay-Sequenz (g) verkettet sind.

5. Verfahren zum Schätzen der Eigenschaften eines Übertragungskanals (3) eines Telekommunikationssystems nach Anspruch 4, das ferner den Schritt zum Empfangen eines Signals zur Kanalschätzung und zum Korrelieren des mit den Sequenzen erhaltenen Signals zur Kanalschätzung, das jeweils einen Teil der zwei Sequenzen (S und G) enthält, umfasst.

6. Verfahren zum Schätzen der Eigenschaften eines Übertragungskanals (3) in einem Telekommunikationssystem nach Anspruch 5, **dadurch gekennzeichnet, dass** die Eigenschaften des Kanals (3) von dem Korrelationsergebnis in einem Zeitfenster [$-K^f$, $K^d$] abgeleitet werden, wobei $K^f$ und $K^d$ die Längen der Erweiterungen sind.

7. Verfahren zum Schätzen der Eigenschaften eines Übertragungskanals (3) in einem Telekommunikationssystem nach Anspruch 5, **dadurch gekennzeichnet, dass** das Korrelationsergebnis eine zeitliche Stelle einer Korrelationsspitze innerhalb des Zeitfensters enthält.

8. Verfahren zum Schätzen der Eigenschaften eines Übertragungskanals (3) in einem Telekommunikationssystem nach Anspruch 5, das ferner einen Schritt zum Verzögern der Sequenz, die einen Teil der Sequenz (G) enthält, in Bezug auf die Sequenz, die einen Teil der Sequenz (S) enthält, vor dem Schritt zum Korrelieren und dem Hinzufügen der zwei in dem Korrelationsschritt erzielten Korrelationsergebnisse umfasst,
wobei die Verzögerung der Sequenz einen Teil der Sequenz (G) enthält, der gleich der Gesamtlänge aus der Sequenz (s), der rechten Erweiterung ($es^d$) der Sequenz (s) und der linken Erweiterung ($eg^f$) der Sequenz (g) ist.

9. Telekommunikationssystem mit einem Sender (1) und einem Empfänger (2), in welchem der Sender (1) dazu bestimmt ist, ein Signal zur Kanalschätzung zu dem Empfänger (2) zu senden, wobei das Schätzsignal aus zwei verketteten Sequenzen (S, G) besteht, die jeweils eine erste Golay-Sequenz (s) und eine zweite Golay-Sequenz (g), die zu der ersten Golay-Sequenz (s) komplementär ist, umfassen, **dadurch gekennzeichnet, dass**

die erste Sequenz (S) ferner mindestens eine der Erweiterungen $es^d$, $es^f$ umfasst, die jeweils eine Replik des Anfangsteils und eine Replik des Endteils der ersten Golay-Sequenz (s) sind und die jeweils mit dem Ende und dem Anfang der ersten Golay-Sequenz (s) verkettet sind, und dass
die zweite Sequenz (G) ferner mindestens eine der Erweiterungen ($eg^d$, $eg^f$) umfasst, die jeweils eine Replik des Anfangsteils und eine Replik des Endteils der zweiten Golay-Sequenz (g) sind und die jeweils mit dem Ende und dem Anfang der zweiten Golay-Sequenz (g) verkettet sind.

10. Sender eines Telekommunikationssystems, der dazu bestimmt ist, ein Schätzsignal zu senden, das aus zwei verketteten Sequenzen (S, G) besteht, die jeweils eine erste Golay-Sequenz (s) und eine zweite Golay-Sequenz (g), die zu der ersten Golay-Sequenz (s) komplementär ist, umfassen, **dadurch gekennzeichnet, dass**

die erste Sequenz (S) ferner mindestens eine der Erweiterungen es$^d$, es$^f$ umfasst, die jeweils eine Replik des Anfangsteils und eine Replik des Endteils der ersten Golay-Sequenz (s) sind und die jeweils mit dem Ende und dem Anfang der ersten Golay-Sequenz verkettet sind, und dass
die zweite Sequenz (G) ferner mindestens eine der Erweiterungen eg$^d$, eg$^f$ umfasst, die jeweils eine Replik des Anfangsteils und eine Replik des Endteils der zweiten Golay-Sequenz (g) sind und die jeweils mit dem Ende und dem Anfang der zweiten Golay-Sequenz (g) verkettet sind.

**Claims**

1. Channel estimation signal transmitted by a transmitter (1) to a receiver (2) over a channel (3) of a telecommunication system, said signal being constituted of two concatenated sequences (S, G) comprising respectively a first Golay sequence (s) and a second Golay sequence (g) which is complementary to the first sequence (s), **characterized in that**

   said first sequence (S) further comprises at least one of the extensions es$^d$, es$^f$ which are respectively a replica of the starting part and a replica of the ending part of said first Golay sequence (s) and which are respectively concatenated at the end and at the beginning of said first Golay sequence, and **in that**
   said second sequence (G) further comprises at least one of the extensions eg$^d$, eg$^f$ which are respectively a replica of the starting part and the ending part of said second Golay sequence (g) and which are respectively concatenated at the end and at the start of said second Golay sequence (g).

2. The channel estimation signal according to claim 1, **characterised in that** the sum of the lengths (K$^f$, K$^d$) of said extensions is larger than the channel length of said channel (3).

3. The channel estimation signal according to claim 1, **characterised in that** the lengths (K$^f$ K$^d$) of said extensions are the same.

4. A method for estimating the characteristics of a transmission channel (3) of a telecommunication system, said method comprising the step of transmitting a channel estimation signal form a transmitter (1) to a receiver (2) over said transmission channel (3), said channel estimation signal being constituted of two concatenated sequences (S, G) comprising respectively a first Golay sequence (s) and a second Golay sequence (g) which is complementary to the first sequence (s), **characterized in that**

   said first sequence (S) further comprises at least one of the extensions es$^d$, es$^f$ which are respectively a replica of the starting part and a replica of the ending part of said first Golay sequence (s) and which are respectively concatenated at the end and at the beginning of said first Golay sequence, and **in that**
   said second sequence (G) further comprises at least one of the extensions eg$^d$, eg$^f$ which are respectively a replica of the starting part and the ending part of said second Golay sequence (g) and which are respectively concatenated at the end and at the start of said second Golay sequence (g).

5. The method for estimating the characteristics of a transmission channel (3) in a telecommunication system according to claim 4, further comprising the step of receiving said channel estimation signal and correlating the received channel estimation signal with the sequences which respectively include a part of said two sequences (S and G).

6. The method for estimating the characteristics of a transmission channel (3) in a telecommunication system according to claim 5, **characterised in that** the characteristics of the channel(3) are derived from the correlation result in a time window [-K$^f$, K$^d$] where K$^f$ and K$^d$ are the lengths of said extensions.

7. The method for estimating the characteristics of a transmission channel (3) in a telecommunication system according to claim 6, **characterised in that** the correlation result includes a time location of a correlation peak within the time window.

8. The method for estimating the characteristics of a transmission channel (3) in a telecommunication system according to claim 5, further comprising the step of delaying the sequence including a part of the sequence (G) with respect to the sequence including a part of the sequence (S) prior to the correlation step and summing the both correlation results obtained in the correlation step,

wherein the delay of the sequence including a part of the sequence (G) being equal to a total length of the sequence (s), the right extension (es$^d$) of the sequence(s) and the left extension (eg$^f$) of the sequence(g).

9. Telecommunication system comprising a transmitter (1) and a receiver (2) I which said transmitter (1) being provided to transmit an channel estimation signal to said receiver (2), said signal being constituted of two concatenated sequences (S, G) comprising respectively a first Golay sequence (s) and a second Golay sequence (g) which is complementary to the first sequence (s), **characterized in that**

said first sequence (S) further comprises at least one of the extensions es$^d$, es$^f$ which are respectively a replica of the starting part and a replica of the ending part of said first Golay sequence (s) and which are respectively concatenated at the end and at the beginning of said first Golay sequence, and **in that** said second sequence (G) further comprises at least one of the extensions eg$^d$, eg$^f$ which are respectively a replica of the starting part and the ending part of said second Golay sequence (g) and which are respectively concatenated at the end and at the start of said second Golay sequence (g).

10. Transmitter of a telecommunication system provided to transmit an channel estimation signal constituted of two concatenated sequences (S, G) comprising respectively a first Golay sequence (s) and a second Golay sequence (g) which is complementary to the first sequence (s), **characterized in that**

said first sequence (S) further comprises at least one of the extensions es$^d$, es$^f$ which are respectively a replica of the starting part and a replica of the ending part of said first Golay sequence (s) and which are respectively concatenated at the end and at the beginning of said first Golay sequence, and **in that** said second sequence (G) further comprises at least one of the extensions eg$^d$, eg$^f$ which are respectively a replica of the starting part and the ending part of said second Golay sequence (g) and which are respectively concatenated at the end and at the start of said second Golay sequence (g).

Fig. 1

Fig. 2

Fig. 3